# EUROPEAN PATENT SPECIFICATION

(11) **EP 1 404 055 B1**
(45) Date of publication and mention of the grant of the patent: **14.06.2006**
(21) Application number: 02257490.9
(22) Date of filing: 29.10.2002
(51) Int. Cl.: H04L 12/28

(54) **Wireless device for data transmission according to a plurality of wireless LAN standards**
Drahtlose Einrichtung zur Datenübertragung in Übereinstimmung mit mehreren drahtlosen LAN Standarden
Dispositif sans fil pour la transmission de données selon plusieurs standards de réseau locaux sans fil

(30) Priority: 30.09.2002 JP 2002287278
(43) Date of publication of application: 31.03.2004
(73) Proprietor: Buffalo Inc., Nagoya-shi, Aichi 457-8520 (JP)
(72) Inventor: Ishidoshiro, Takashi, c/o Melco Inc., Nagoya-shi, Aichi 457-8520 (JP)
(74) Representative: Sturt, Clifford Mark

(56) References cited:
- WO-A-01/30039
- WO-A-01/35578
- WO-A-02/30022
- WO-A-99/29126

## Description

### BACKGROUND OF THE INVENTION

### 1. Field of the invention:

The present invention relates to a wireless LAN, a method for data transmission and reception through a wireless LAN, and a medium storing a program to control data transmission and reception.

### 2. Description of the prior art:

The wireless LAN involves a variety of standards, including the one specifying transmission speeds. These standards are being continuously revised with the times to meet requirements for higher speeds.

The revision of standards needs solutions of non-technical problems as well as technical problems. Technical capability alone does not realize a high-speed wireless LAN.

The conventional wireless LAN of this type employs any one of several standards to perform data transmission and reception.

The disadvantage of the conventional wireless LAN is that it cannot increase the transmission speed until the standard is revised. Even though a proprietary technology can be developed, it would be inconvenient for users because it lacks generality.

Document WO 01/35578 A1 discloses a wireless LAN which comprises a first device and a second device, the first device having a data transmitting and receiving means capable of transmitting and receiving data according to a plurality of wireless LAN standards. This allows to increase the transmission bit rate. However, the transmission of data that uses these different standard does not occur between the two devices and there is no allocation of packets to each standard in dependence of a speed of execution transmission of each standard.

### SUMMARY OF THE INVENTION

It is an object of the present invention to provide a wireless LAN, a method for data transmission and reception through a wireless LAN, and a medium storing a program to control data transmission and reception, said wireless LAN being able to increase the transmission speed while keeping the generality without waiting the revision of standards.

According to one aspect of the present invention, there is provided a wireless LAN which comprises a first device and a second device, the first device having a data transmitting and receiving means capable of transmitting and receiving data according to a plurality of wireless LAN standards, and a data transmission/reception controlling means which permits said data transmitting and receiving means both to transmit data to and to receive data from the second device by using a plurality of wireless LAN standards simultaneously in parallel;
wherein the data to be transmitted and received is composed of packets, and the data transmission/reception controlling means is capable of adjusting the number packets to be transmitted according to each standard among a plurality of wireless LAN standards; and
wherein the data transmission/reception controlling means possesses a means to acquire the execution transmission speed for data transmission and reception according to each standard among a plurality of wireless LAN standards, and a means to adjust the number of packets to be allocated to each standard in response to the execution speed acquired.

According to the present invention constituted as mentioned above, the data transmitting and receiving means is able to transmit and receive data according to a plurality of wireless LAN standards and the data transmission/reception controlling means permits the data transmitting and receiving means to transmit and receive data by using a plurality of wireless LAN standards simultaneously in parallel.

In other words, the present invention is designed to substantially increase the speed of data transmission and reception by using the existing standards simultaneously in parallel without modifying them.

As mentioned above, the present invention provides a wireless LAN which can increase the transmission speed while keeping the generality without waiting the revision of standards.

In the case constructed as mentioned above, the data to be transmitted and received is composed of packets and the above-mentioned data transmission/reception controlling means is constructed such that the number of packets to be transmitted is adjustable according to each of the wireless LAN standards.

In other words, if there are different data amounts conforming to individual standards, it is possible to allocate an adequate data amount without allocating the same data amount indiscriminately to each standard. By adjusting the number of packets to be transmitted for each standard in this way, it is possible to allocate an optimum data amount conforming to the standard.

In addition, the above-mentioned data transmission/reception controlling means is composed of two means. The first means is capable of acquiring the execution transmission speed for data transmission and reception according to individual standards among a plurality of wireless LAN standards. The second means is capable of adjusting the number of packets to be allocated to each standard in response to the execution speed acquired.

In the above-mentioned construction, the number of packets to be transmitted is adjusted for each standard among a plurality of wireless LAN standards. Therefore, the means to acquire the execution transmission speed in the means to control the data transmission and reception acquires the execution speed of data transmission and reception for each standard among a plurality of wireless LAN standards, and the means to adjust the number of packets allocates the number of packets for each standard in response to the acquired execution speed.

Since the number of packets is allocated for each standard in response to the execution speed in this way, high-speed efficient data transmission and reception become possible without waste waiting time.

Incidentally, the above-mentioned means to acquire the execution transmission speed may be constructed such that it is capable of acquiring the execution speed before the start of data transmission and reception.

In the case of this construction, the means to acquire the execution transmission speed is capable of acquiring the execution speed before the start of data transmission and reception.

In other words, the wireless LAN involves two cases. In one case there exists a general procedure to acquire the execution speed as the preliminary process for data transmission and reception, and in the other case, such a general procedure does not exist. If such a procedure is available, the execution speed is acquired by means of it, and if such a procedure is not available, the execution speed is acquired by using dummy data transmission and reception.

By acquiring the execution speed previously before the start of data transmission and reception as mentioned above, it is possible to make an optimal allocation at the start of data transmission and reception.

Moreover, the means to acquire the execution transmission speed maybe constructed such that it is capable of acquiring the execution speed in accordance with the amount of data transmitted and received after the start of data transmission and reception.

In the case of this construction, the means to acquire the execution transmission speed acquires the execution speed in accordance with the amount of data transmitted and received after the start of data transmission and reception.

In other words, since the processing time and the amount of data processed are known after the start of data transmission and reception, it is possible to acquire the execution speed in accordance with them.

In addition, since the execution speed is acquired in accordance with the amount of data transmitted and received after the start of data transmission and reception, it is possible to accomplish optimal transmission and reception in accordance with the execution speed on the real conditions. It is also acceptable as a matter of course to amend the execution speed acquired at the start of data transmission and reception in accordance with the execution speed after the start of data transmission and reception.

In addition, the means to adjust the number of packets may be constructed such that the number packets is capable of being allocated in proportion to the execution speed for each standard.

In the above-mentioned construction, the means to adjust the number of packets is capable of allocating the number of packets in proportion to the execution speed for each standard for the number of packets to be allocated when the execution speed is acquired.

Since the number of packets is allocated in proportion to the execution speed in this manner, a smaller number of packets is allocated to the one which has a slow execution speed and a larger number of packets is allocated to the one which has a high execution speed. Thus it is possible to realise an optimal allocation.

In addition, the means to adjust the number of packets may be constructed such that it is referenced each time packets are transmitted sequentially and a table to specify the standard for transmission is prepared by referencing.

In the above-mentioned construction, the means to adjust the number of packets prepares a table which is referenced each time packets are transmitted sequentially.
This is table is so designed as to specify the standard to be transmitted when it is referenced each time packets are transmitted. If a procedure to prepare the table is implemented previously, no further procedure is necessary later to specify the standard to be allocated. Thus, it is possible to allocate packets simply by referencing the table, and this simplifies the processing.

The technique of performing data transmission and reception by using a plurality of wireless LAN standards simultaneously in parallel is not always limited to tangible devices; but it is easily understood that it functions as a method. Therefore, the invention pertaining to claim 6 provides a method of transmitting and receiving data composed of packets between a first device and a second device, the method comprising:
acquiring the execution transmission speed for data transmission and reception according to each standard among a plurality of wireless LAN standards;
adjusting the number packets to be transmitted according to each standard among the plurality of wireless LAN standards in response to the execution speed acquired; and transmitting and receiving the data between the first device and the second device by using the plurality of wireless LAN standards simultaneously in parallel.

In other words, there is no difference in that it is not limited to tangible devices but it is also effective as a method.

Incidentally, such a wireless LAN may exist alone or incorporated into a certain machine. The concept of the invention is not limited to them; but it covers a variety of embodiments. Therefore, it will include software as well as hardware depending on situations.

In the case where the concept of the present invention is embodied in wireless LAN software, it naturally exists in a recording medium storing such software and it is used in such a way.

As an example, the invention pertaining to claim 7 provides a computer readable storage medium storing a set of machine executable instructions, said set of machine executable instructions being executed by a computer to perform the steps of method claim 6. It realises the function to perform data transmission and reception by using a plurality of wireless LAN standards simultaneously in parallel.

Needless to say, the recording medium may be a magnetic recording medium or a magneto-optical recording medium or any one which would be developed in the future. It also includes primary and secondary duplicates in any form.

In addition, the concept of the present invention may be realised partly in the form of software and partly in the form of hardware. Alternatively, it may exist in such a form that a portion is recorded on a recording medium and read time to time as occasion demands.

In the case where the present invention is embodied in software, it is possible to use hardware and operating system in combination or separately. For example, it is possible to accomplish arithmetic processes by calling a specific function from the operating system or entering such a function through the hardware instead of calling. Even thought the present invention is practically embodied in the presence of operating system, it is to be understood that the present invention can be practised only by this program in an environment in which the program is circulated in the form recorded in a medium.

Moreover, in the case where the present invention is put into practice in the form of software, the invention is naturally realized as a medium which stores the program and also as the program itself. Thus the program itself is covered by the invention.

### BRIEF DESCRIPTION OF THE DRAWINGS

Fig. 1 is a block diagram of the wireless LAN pertaining to one embodiment of the present invention.
Fig. 2 is a block diagram of the wireless LAN pertaining to one modified embodiment of the present invention.
Fig. 3 is a block diagram of the wireless LAN pertaining to another modified embodiment of the present invention.
Fig. 4 is a block diagram of the wireless LAN pertaining to another modified embodiment of the present invention.
Fig. 5 is a diagram showing the flowchart of main.
Fig. 6 is a diagram which shows the correspondence between the sequence of packets and the standard to be used.
Fig. 7 is a flowchart for table preparation.
Fig. 8 is a flowchart for communications to be carried out by using the table.
Fig. 9 is a flowchart for communications to be carried out by using the execution transmission speed based on the amount of actual data transmission.

### DESCRIPTION OF THE PREFERRED EMBODIMENTS

The embodiments of the present invention will be described with reference to the accompanying drawings.

### (1) The first embodiment:

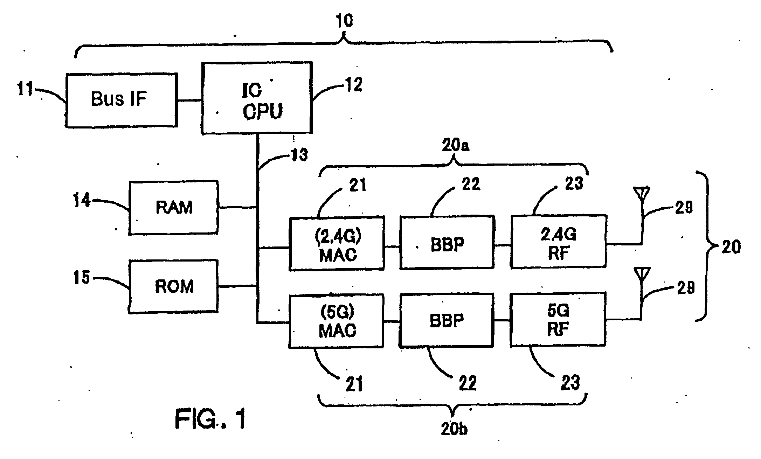

Fig. 1 is a schematic block diagram showing the structure of hardware for the wireless LAN card which realizes the wireless LAN pertaining to the first embodiment of the present invention.

In this figure, the wireless LAN card 10 has the bus IF 11 which is an interface for connection to the bus to which are attached computer peripherals (not shown), and it is also connected to the CPU 12 for its centralized control. The CPU 12 is connected to the internal bus 13, to which are connected the RAM 14 and the ROM 15. The CPU 12 executes arithmetic processing by using the storage area in the RAM 14 in accordance with the firmware and data stored in the ROM 15.

The bus 13 has two.sets of physical layer circuits 20 connected thereto. Each of the physical layer circuits 20 consists of the MAC circuit 21, the baseband processor (BBP) circuit 22, and the radio circuit (RF) 23. The MAC circuit 21 controls medium access, and the radio circuit 23 transmits digital data over an appropriate frequency band, with the baseband processor circuit 22 interposed.

In this embodiment, the first physical layer circuit 20a realizes the wireless LAN conforming to the standard of IEEE 802.11a. It uses the frequency band of 5 GHz. On the other hand, the second physical layer circuit 20b realizes the wireless LAN conforming to the standard of IEEE 802.11b. It uses the frequency band of 2.5 GHz.

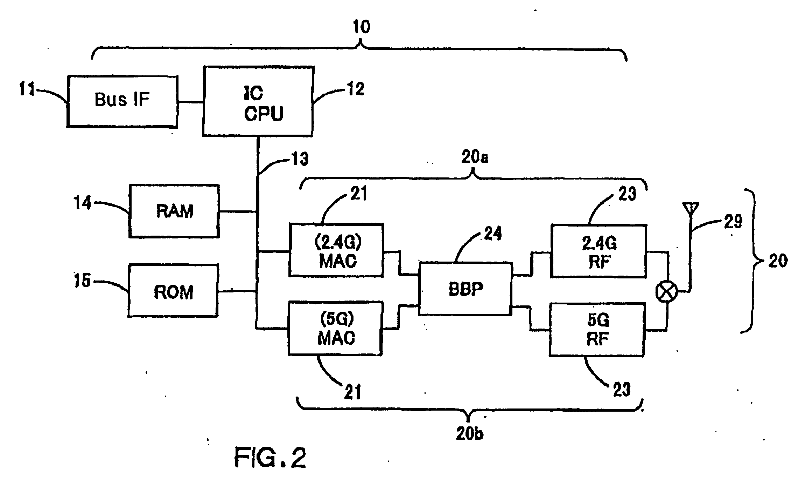

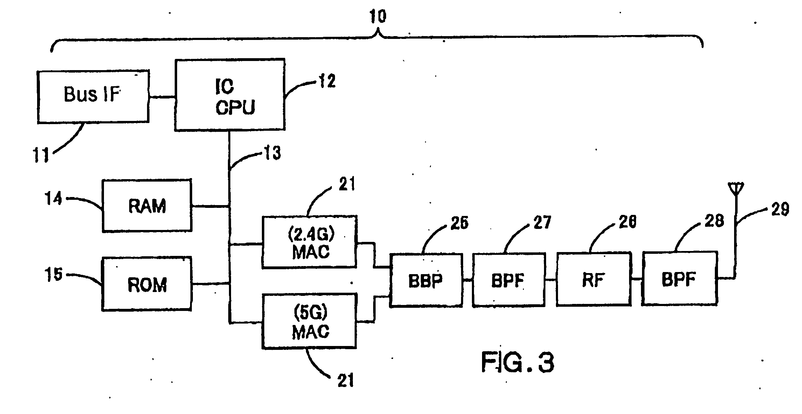

In this embodiment, the physical layer circuits 20a and 20b are separately constructed; however, it is possible to construct them such that part of the hardware is possessed in common. For example, in the embodiment shown in Fig. 2, the two baseband processor circuits 22 are replaced by a single baseband processor circuit 24 which is possessed in common. The embodiment shown in Fig. 3 has a single baseband processor 25 possessed in common and also has the radio circuit 28 (capable of broad band amplification) which handles both 2.4 GHz band and 5 GHz band. The band pass filters 27 and 28 facilitate the signal processing for components only in the frequency bands of 2.4 GHz and 5 GHz.

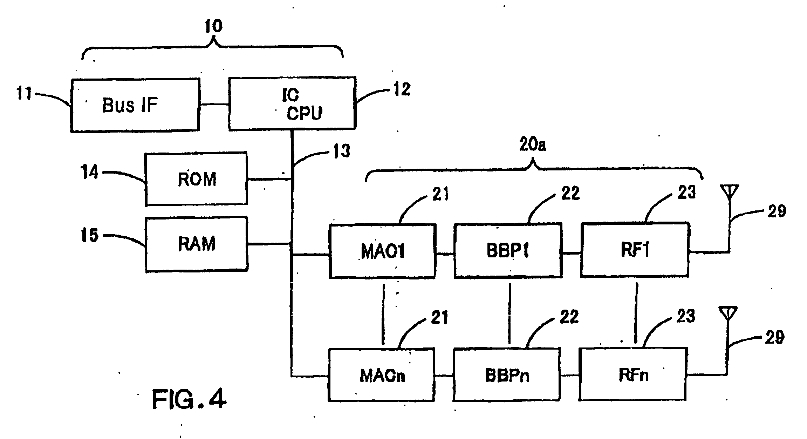

For easy understanding, the foregoing embodiments were explained on the assumption that two standards are used simultaneously in parallel. However, the present invention is not restricted to the case where two standards are used. Fig. 4 is a schematic block diagram showing the hardware construction corresponding to as many wireless LAN standards as n. It is to be noted that n sets of physical layer circuits 20 are connected in parallel to the bus 13.

The following explains the case in which as many standards as n are used simultaneously in parallel.

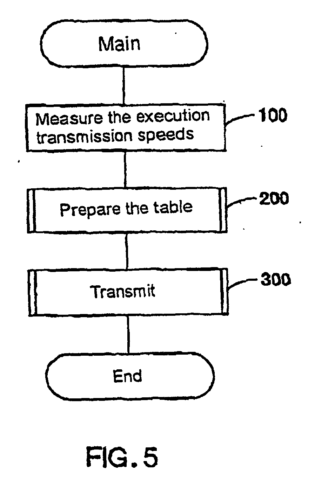

Fig. 5 is a schematic flowchart for network connection and data transmission through the wireless LAN card 10 pertaining to the present invention. Incidentally, data transmission through LAN usually needs two sets of flow for the transmission side Tx and the reception side Rx. However, the following description is restricted to one procedure alone for easy understanding.

The step 100 is intended for measurement of execution (or substantial) transmission speed bw. The execution transmission speed is measured at the start of session. In other words, the execution transmission speed bw per unit time is measured on the basis of time required to confirm that all data have been transmitted normally (time difference between start and completion of transmission) and also on the basis of the substantial amount of data transmitted when a certain amount of data is transmitted from the transmission side Tx to the reception side Rx.

The execution transmission speeds bw measured in this manner are designated as bw1 and bw2 for the physical layer circuits 20a and 20b corresponding to two standards (IEEE802.11a and IEEE802.11b). Also, they are designated as bw1 to bwn if there are n standards.

The step 200 is intended to prepare, based on the result of measurement, the table to specify the sequence of sending packets and the standard to be used.

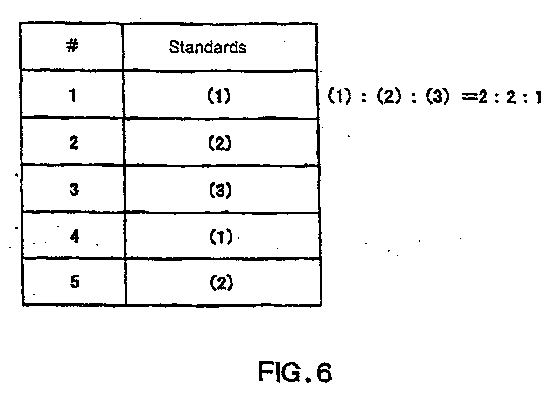

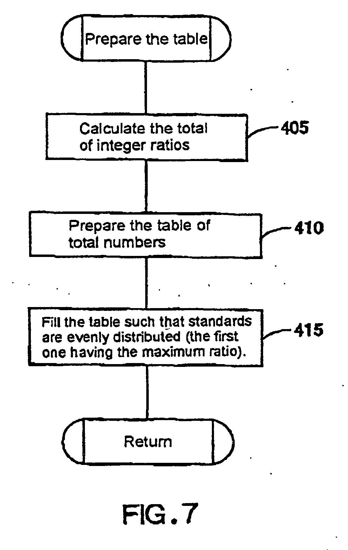

Fig. 6 is a table which shows the correspondence between the packet sending sequence and the standard to be used. This table is prepared in a way which is explained below with reference to the flowchart shown in Fig. 7. The step 405 is intended to obtain an approximate integer ratio on the basis of the execution transmission speed for each standard and then obtain its total. For example, assuming that the ratio of the execution transmission speed is 2:2:1 for standards (1) to (3), the total is 5.

Next, the step 410 is intended to prepare a table having as many elements as the total. In this example, a table having 5 elements is prepared as shown in Fig. 6. The step 415 is intended to fill the table in such a way that the standards are evenly distributed. For example, if the total of elements is 5 and the standard (1) has an integer ratio of 2, 2 is divided by 5 and the result (2/5 = 2.5) is rounded up to 3. Thus the elements are separated by 3. Consequently, the standard (1) is applied to the first and fourth elements in the table. Likewise, in the case of the standard (2) in which the integer ratio is 2, the table is filled with elements which are apart at intervals of 3 so that elements are scattered evenly. However, since there are empty boxes, the elements are moved down sequentially so that the second and fifth elements conform to the standard (2).

As for the standard (3), only the third box is empty for the element. Therefore, the third element in the table is regarded as conforming to the standard (2). The above-mentioned algorism is a mere example for even distribution; it would be possible to adopt another algorism for more efficient distribution.

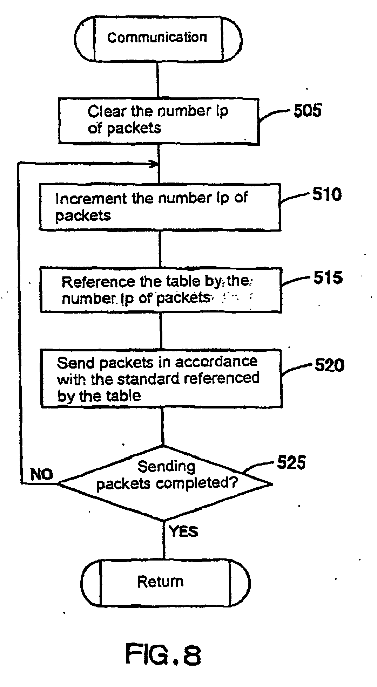

Next, how to perform communications by referencing this table is explained below with reference to the flowchart shown in Fig. 8.

Step 505 is to clear the number Ip of packets as in the previous case. Step 510 is to increment the number Ip of packets by 1. Step 515 is to reference the table based on the number of packets Ip counted. The number Ip of packets is divided by the number of elements and the remainder is obtained. For example, assuming that the number of elements in the table is 5, the remainder of division is 1 if the number Ip of packets is 1 or 6. As the result of referencing the table, packets are transmitted in accordance with the standard (1) in step 520.

Step 525 is to judge whether or not the transmission of packets has completed; and if not, step 510 and onward are repeated.

### (2) The second embodiment

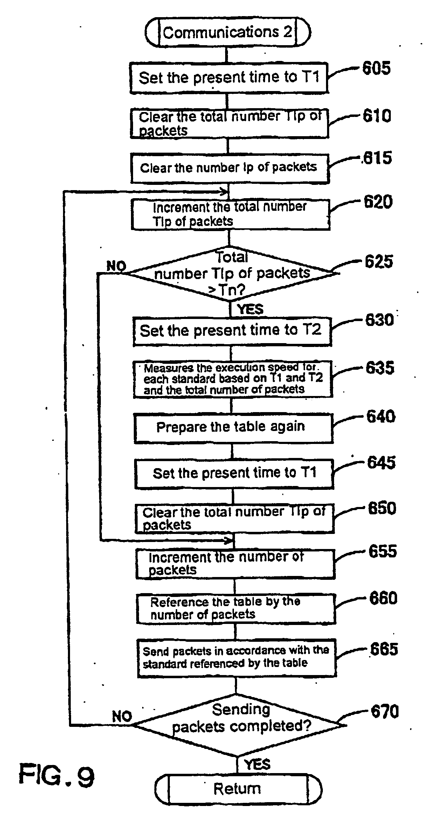

In the above-mentioned embodiment, the execution transmission speed is based on the value measured before the start of data transmission and reception. However, there is the possibility that a discrepancy occurs between the execution transmission speed obtained in a short period and the execution transmission speed based on the result of data transmission over a long period of time. Thus, how to measure the execution transmission speed based on the amount of actual data transmission is explained below with reference to the flowchart shown in Fig. 9.

First, step 605 is to set the present time at a variable T1. Step 610 is to clear the total number TIp of packets. Step 615 is to clear the number Ip of packets. It is assumed in the following that the elapsed time is measured at the time when as many packets as the total number TIp of packets have been transmitted, and the execution transmission speed per unit time is obtained.

First, step 620 is to increment the total number TIp of packets by 1. Step 625 is to judge whether or not the total number TIp of packets exceeds the prescribed number Tn. If the total number TIp of packets exceeds the prescribed number Tn, step 630 sets the present time to T2, and step 635 measures the execution speed for each standard. The amount of data transmission for each standard may be actually counted or determined by using the ratio for each standard mentioned in the table if the table has been prepared. Step 640 is to prepare the table again in the same way as shown in Fig. 8 on the basis of the actual transmission speed.

After that, step 645 sets again the present time to T1, and step 650 clears the total number TIp of packets.

Steps 655 to 670 are intended to perform processing to obtain the standard to be used by referencing the table. This processing is performed in the same way as in the flowchart shown in Fig. 8.

Incidentally, step 665 performs the packet transmission in accordance with the standard referenced in the table. Alternatively, the execution speed may be obtained by measuring time required for packet transmission, accumulating sequentially transmission time for individual standards, and multiplying the accumulated time by the number of packets transmitted.

As mentioned above, the wireless LAN card 10 containing two sets of physical layer circuits 20a and 20b corresponding to two sets of wireless LAN standards (IEEE 802.11a and IEEE 802.11b) is controlled by the CPU 12. By using these two sets of wireless LAN standards, it is possible to increase the amount of data transmission per unit time while maintaining the standards. Moreover, it is also possible to realize high-speed data transmission easily by using more than two wireless LAN standards simultaneously in parallel.

## Claims

1. A wireless LAN which comprises a first device and a second device, the first device having a data transmitting and receiving means (20a, 20b) capable of transmitting and receiving data according to a plurality of wireless LAN standards, and **characterised by** a data transmission/reception controlling means (12) which permits said data transmitting and receiving means both to transmit data to and to receive data from the second device by using a plurality of wireless LAN standards simultaneously in parallel;
wherein the data to be transmitted and received is composed of packets, and the data transmission/reception controlling means (12) is capable of adjusting the number packets to be transmitted according to each standard among a plurality of wireless LAN standards; and
wherein the data transmission/reception controlling means (12) possesses a means to acquire the execution transmission speed for data transmission and reception according to each standard among a plurality of wireless LAN standards, and a means to adjust the number of packets to be allocated to each standard in response to the execution speed acquired.

2. A wireless LAN as defined in claim 1, wherein the means to acquire the execution transmission speed is capable of acquiring the execution speed before the start of data transmission and reception.

3. A wireless LAN as defined in claim 1, wherein the means to acquire the execution transmission speed is capable of acquiring the execution speed on the basis of the amount of data which has been transmitted and received after the start of data transmission and reception.

4. A wireless LAN as defined in any of claims 1 to 3, wherein the means to adjust the number of packets is capable of allocating the number of packets in proportion to the execution speed for each standard.

5. A wireless LAN as defined in any of claims 1 to 4, wherein the means to adjust the number of packets is referenced each time the packets are transmitted sequentially, and a table to specify the standard to be transmitted is prepared by referencing.

6. A method of transmitting and receiving data composed of packets between a first device and a second device, the method comprising:
acquiring the execution transmission speed for data transmission and reception according to each standard among a plurality of wireless LAN standards (100);
adjusting the number packets to be transmitted according to each standard among the plurality of wireless LAN standards in response to the execution speed acquired (200); and
transmitting and receiving the data between the first device and the second device by using the plurality of wireless LAN standards simultaneously in parallel (300).

7. A computer readable storage medium storing a set of machine executable instructions, said set of machine executable instructions being executed by a computer to perform the steps of method claim 6.

## Patentansprüche

1. Drahtloses LAN, das eine erste Vorrichtung und eine zweite Vorrichtung umfasst, wobei die erste Vorrichtung eine Einrichtung zum Senden und Empfangen von Daten (20a, 20b) aufweist, die Daten entsprechend einer Vielzahl von drahtlosen LAN-Standards senden und empfangen kann, und **gekennzeichnet ist durch** eine Daten-Sende/Empfangs-Steuereinrichtung (12), die es der Einrichtung zum Senden und Empfangen von Daten gestattet, Daten zu der zweiten Vorrichtung sowohl zu senden als auch von dieser zu empfangen, indem eine Vielzahl von drahtlosen LAN-Standards gleichzeitig parallel verwendet wird;
wobei die zu sendenden und zu empfangenden Daten sich aus Paketen zusammensetzen, und die Daten-Sende/Empfangs-Steuereinrichtung (12) die Anzahl der zu sendenden Pakete entsprechend einem Standard aus einer Vielzahl von drahtlosen LAN-Standards anpassen kann; und
wobei die Daten-Sende/Empfangs-Steuereinrichtung (12) eine Einrichtung besitzt, um die Übertragungsgeschwindigkeit zum Ausführen von Daten-Übertragung und - Empfang entsprechend jedem Standard aus einer Vielzahl von drahtlosen LAN-Standards zu erlangen; und eine Einrichtung, um die Anzahl der Pakete, die jedem Standard in Reaktion auf die erlangte Ausführungsgeschwindigkeit zugewiesen werden sollen, anzupassen.

2. Drahtloses LAN nach Anspruch 1, wobei die Einrichtung zum Erlangen der Übertragungsgeschwindigkeit zum Ausführen die Ausführungsgeschwindigkeit vor dem Beginn von Daten-Übertragung und -Empfang erlangen kann.

3. Drahtloses LAN nach Anspruch 1, wobei die Einrichtung zum Erlangen der Übertragungsgeschwindigkeit zum Ausführen die Ausführungsgeschwindigkeit auf der Basis der Datenmenge erlangen kann, die nach dem Beginn von Daten-Übertragung und -Empfang gesendet und empfangen worden ist.

4. Drahtloses LAN nach irgendeinem der Ansprüche 1 bis 3, wobei die Einrichtung zum Anpassen der Anzahl von Paketen die Anzahl von Paketen in Proportion zu der Ausführungsgeschwindigkeit für jeden Standard zuweisen kann.

5. Drahtloses LAN nach irgendeinem der Ansprüche 1 bis 4, wobei die Einrichtung zum Anpassen der Anzahl von Paketen jedes Mal referenziert wird, wenn die Pakete nacheinander gesendet werden, und eine Tabelle zum Angeben des zu sendenden Standards durch die Referenzierung erstellt wird.

6. Verfahren zum Senden und Empfangen von Daten, die sich aus Paketen zusammensetzen, zwischen einer ersten Vorrichtung und einer zweiten Vorrichtung, wobei das Verfahren umfasst:
Erlangen der Übertragungsgeschwindigkeit zum Ausführen von Senden und Empfangen von Daten entsprechend jedem Standard aus einer Vielzahl von drahtlosen LAN-Standards (100);
Anpassen der Anzahl der zu sendenden Pakete entsprechend jedem Standard aus der Vielzahl von drahtlosen LAN-Standards in Reaktion auf die erlangte Ausführungsgeschwindigkeit (200); und
gleichzeitiges paralleles Senden und Empfangen der Daten zwischen der ersten Vorrichtung und der zweiten Vorrichtung unter Verwendung der Vielzahl von drahtlosen LAN-Standards (300).

7. Computerlesbares Speichermedium, das einen Satz maschinenausführbarer Anweisungen speichert, wobei der Satz von maschinenlesbaren Anweisungen durch einen Computer ausgeführt wird, um die Verfahrensschritte von Anspruch 6 durchzuführen.

## Revendications

1. Réseau local sans fil qui comprend un premier dispositif et un second dispositif, le premier dispositif comportant un moyen de transmission et de réception de données (20a, 20b) apte à transmettre et recevoir des données selon une pluralité de standards de réseaux locaux sans fil et **caractérisé par** un moyen de commande de transmission/réception de données (12) qui permet audit moyen de transmission et de réception de données à la fois de transmettre des données et de recevoir des données du second dispositif en utilisant une pluralité de standards de réseaux locaux sans fil simultanément en parallèle ;
dans lequel les données à transmettre et à recevoir sont composées de paquets et le moyen de commande de transmission/réception de données (12) est apte à régler le nombre de paquets à transmettre en fonction de chaque standard parmi une pluralité de standards de réseaux locaux sans fil ; et
dans lequel le moyen de commande de transmission/réception de données (12) possède un moyen afin d'acquérir la vitesse d'exécution de transmission en vue de la transmission et la réception des données selon chaque standard parmi une pluralité de standards de réseaux locaux sans fil ; et un moyen pour régler le nombre de paquets à allouer à chaque standard en réponse à la vitesse d'exécution acquise.

2. Réseau local sans fil selon la revendication 1, dans lequel le moyen pour acquérir la vitesse d'exécution de transmission est en mesure d'acquérir la vitesse d'exécution avant le début de la transmission et la réception de données.

3. Réseau local sans fil selon la revendication 1, dans lequel le moyen pour acquérir la vitesse d'exécution de transmission est en mesure d'acquérir la vitesse d'exécution sur la base de la proportion de données qui a été transmise et reçue après le début de la transmission et réception de données.

4. Réseau local sans fil selon l'une quelconque des revendications 1 à 3, dans lequel le moyen pour régler le nombre de paquets est en mesure d'allouer le nombre de paquets proportionnellement à la vitesse d'exécution pour chaque standard.

5. Réseau local sans fil selon l'une quelconque des revendications 1 à 4, dans lequel le moyen pour régler le nombre de paquets est référencé chaque fois que les paquets sont transmis séquentiellement et une table spécifiant la standard à transmettre est préparée par référencement.

6. Procédé de transmission et de réception de données composées de paquets entre un premier dispositif et un second dispositif, le procédé consistant à :
acquérir la vitesse d'exécution de transmission en vue de la transmission et la réception des données selon chaque standard parmi une pluralité de standards de réseaux locaux sans fil (100) ;
régler le nombre de paquets à transmettre selon chaque standard parmi la pluralité de standards de réseaux locaux sans fil en réponse à la vitesse d'exécution acquise (200); et
transmettre et recevoir les données entre le premier dispositif et le second dispositif en utilisant la pluralité de standards de réseaux locaux sans fil simultanément en parallèle (300).

7. Support de stockage pouvant être lu par un ordinateur et stockant un ensemble d'instructions exécutables par une machine, ledit ensemble d'instructions exécutables par une machine étant exécuté par un ordinateur afin de mettre en oeuvre les étapes du procédé de la revendication 6.
